# EUROPEAN PATENT SPECIFICATION

(11) **EP 2 504 983 B1**
(45) Date of publication and mention of the grant of the patent: **31.08.2016**
(21) Application number: 09851559.6
(22) Date of filing: 24.11.2009
(51) Int. Cl.: H04M 1/57

(54) **METHOD AND GATEWAY DEVICE FOR TRANSMITTING A CALLER NUMBER**
VERFAHREN UND GATEWAY ZUR SENDUNG EINER RUFNUMMER
PROCÉDÉ ET DISPOSITIF DE TRANSMISSION D'UN NUMÉRO D'APPELANT

(43) Date of publication of application: 03.10.2012
(73) Proprietor: Nokia Solutions and Networks Oy, 02610 Espoo (FI)
(72) Inventor: ZHOU, Yandong, Beijing 100016 (CN); LING, Weibin, Beijing 100000 (CN); LI, Song, Beijing 100107 (CN); LI, Junli, Beijing 100102 (CN)
(74) Representative: Borgström, Markus
(86) International application number: PCT/CN2009/001307
(87) International publication number: WO 2011/063544

(56) References cited:
- WO-A1-2004/105372
- CN-A- 101 242 441
- CN-A- 101 325 765
- CN-A- 101 494 686
- US-A1- 2005 105 540
- "Public Switched Telephone Network (PSTN); Subscriber line protocol over the local loop for display (and related) services; Part 1: On hook data transmission; ETS 300 659-1", IEEE, LIS, SOPHIA ANTIPOLIS CEDEX, FRANCE, vol. SP-3, 1 February 1997 (1997-02-01), XP014017899, ISSN: 0000-0001

## Description

### (Technical Field)

The invention relates to a method for transmitting a caller number, comprising:
- receiving digital coded first data which comprises the digits of a caller number.

### (Background)

There are several methods for transmitting a caller number to a callee, for instance:
- CLIP (Calling Line Identification Presentation) for ISDN (Integrated Services Digital Network) according to ITU-T Q.731.7, where only digital data is processed. CLIP is used for instance in Europe, especially in Germany.
- CID (Caller Identification) or CNID (Calling Number Identification), especially for POTS (Plain Old Telephone Service) lines, i.e. analog lines. CID is used for instance in US and Canada where it is named "call display".

Furthermore, there is ANI (Automatic Number Identification) which is a feature of telephony intelligent network services that permits subscribers to display or capture the billing telephone number of a calling party.

However, it is not possible to use the old services any more for IP-telephony (VoIP Voice over IP). Furthermore, many IP-telephone subscriber use analog lines also for VoIP.

There is, therefore, a need in the art to provide a method, messages, gateway device and gateway control device for transmitting a caller number, especially in a simple way.

The application US 2005/0105540 A1 "Method for Transmitting the Subscriber Signaling of an Analog Connection of the Public

Telephone Network in an IP Network" discloses a method, where FSK signals are used for the subscriber signaling in the public telephone network and said signals are transmitted in the IP network in the media gateway control protocol, which is modified by "signal requests parameter".

The ETSI recommendation ETS 300 659-1 "Public Switched Telephone Network (PSTN); Subscriber line protocol over the local loop for display (and related) services; Part 1: On hook data transmission" discloses the sending of display information by sending a series of DTMF codes within a predefined time range after line seizure.

### (Summary of the invention)

This need is accomplished by the independent claims. The further subclaims refer to specific embodiments of the present invention.

According to an embodiment a method for transmitting a caller number is given, comprising:
- receiving digital coded first data which comprises the digits of a caller number,
- using the received first data to generate at least one tone for each digit, and
- sending the tone to a telephone of a callee,
wherein all steps are performed automatically in a gateway device which transmits data between networks using transmission protocols that are different from each other, and
wherein the gateway device is controlled by a control device and wherein the protocol according to IETF (International Engineering Task Force) RFC 3015 (Request For Comment) or ITU-T protocol (International Telecommunication Union - Telecommunication Standardization Sector) H.248.1 is used between the gateway device and the control device or a protocol that is based on one of these protocol.

According to a next embodiment a message is given according to protocol IETF RFC 3015 or according to ITU-T protocol H.248.1 or a protocol that is based on one of these protocols,
- wherein the message is a first event message that is used to start the detection of a request tone which indicates that a callee requests the number of a caller,
- or wherein the message is a second event message which is used to signal the detection of a request tone by which the callee requests the number of the caller,
- or wherein the message is a third event message which is used to indicate that a gateway device has received and/or forwarded first data comprising the digits of a caller number,
or wherein the message comprises signal data comprising a data block that includes the first data and/or a category value for the caller.

According to a further embodiment a gateway device is provide comprising:
- a receiving unit that is able to receive digital coded first data which comprises the digits of a caller number,
- a generation unit that generates at least one tone for each digit, and
- a sending unit that is able to send the tones to a telephone of a callee.

Furthermore, a gateway control device is given comprising:
- a sending unit that is able to send digital coded first data which comprises the digits of a caller number to a gateway device which transmits data between networks using transmission protocols that are different from each other.

Moreover, according to the present invention there is provided a computer program having computer readable program code portions for performing the method according to one of the method claims.

### (General description of embodiments)

A method for transmitting a caller number may comprise:
- receiving digital coded first data which comprises the digits of a caller number,
- using the received first data to generate at least one tone for each digit,
- sending the tone to a telephone of a callee,
wherein all steps are performed automatically in a gateway device which transmits data between networks using transmission protocols that are different from each other, and
wherein the gateway device is controlled by a control device and wherein the protocol according to IETF RFC 3015 or ITU-T protocol H.248.1 is used between the gateway device and the control device or a protocol that is based on one of these protocols.

The caller may be also named as a calling subscriber and the callee may be named as a called subscriber. Instead of transmitting only digits it is possible that the caller number also contains some letters as it is typical for some regions of the world. Alternatively, the caller number may contain only letters.

In the context of the embodiment a tone may be an analog signal, i.e. a signal comprising a continuous signal curve, for instance a sinus wave. The tone may be transmitted via an analog line in an analog form, i.e. especially without digital coding/decoding.

The two networks may not only use different transmission protocols, as for instance analog signal transmission and Internet protocol, but also different signaling protocols.

The technical effect of the embodiment is that it is possible to used the services CID (Caller Identification) or CNID (Calling Number Identification) also for subscribers that use VoIP but still have an analog line or an analog access. This effect is achieved by a slight expansion of the MEGACO (MEdia GAteway COntrol)/H.248 protocol, i.e. of protocols that are well established in the market.

The method may further comprise:
- storing data which specifies at least one tone for each digit value,
- using the stored data to determine the corresponding at least one tone for each digit of the caller number in the received data.

The stored data may have the form of a look up table that may be accessed very fast. It is advantageous if the data is stored in the media gateway in order to not to overload the media gateway control unit or other central control units by actions which can also be performed in the peripheral devices. However, alternatively the data may be stored outside the media gateway, for instance in the media gateway controller. In this case, data may be transmitted to the media gateway which specifies specific tones directly.

There may be no silence intervals between the tones or the silent intervals between successive tones may be smaller than 20 ms (millisecond) or smaller than 5 ms and greater than for instance 0. 5 ms. This shortens the time for transmission of the number data and makes the service faster.

A repetition character may be used in the first data to indicate repetition of a digit. This feature is especially advantageous if no silence intervals or only short silence intervals are used between the tones. Detection of the tones is more easily as it is prevented that two identical tones are transmitted in sequence. Nevertheless, it is possible to transmit also numbers that include repetitions of digits.

A voice channel may be switched from a voice mode to a signaling mode after receiving digital coded first data and before sending the generated tones. This enables to avoid interferences of voice and signals, for instance.

A first event message may be used to start the detection of a request tone which indicates that the callee requests the number of the caller. The event message may be a command in the language of the Megaco/H.248 protocol. The first event message may be sent from a media gateway controller to the media gateway. Thus it is possible to start the service in the media gateway for all lines or for selected lines connected to the media gateway. However, there may be a default setting in the media gateway which makes the use of this message unnecessary.

The first event message may comprise a parameter describing the request tone. This enables the selection of a special request tone from more than one possible tones that may be used, for instance in different countries.

A second event message or command may be used to signal the detection of the request tone or of a request tone which indicates that the callee requests the number of the caller. The second event message may be sent from the media gateway to the media gateway controller to start further processing, for instance to start the transmission of the number data. Furthermore, a voice channel may be changed from voice mode to a signaling mode. Voice channel is a communication channel having sufficient bandwidth to carry voice frequencies intelligibly. There are two modes within voice channel - voice mode and signaling mode. In most cases, the voice channel works in voice mode which mainly carry human voice. But if it needs to support complex in-band tones, such as the tones with multiple frequencies, amplitudes, and cadences, the voice channel will be changed to signaling mode. In addition, the signaling mode could filter the voice from IP network which may interfere the first data forwarding.

The second event message may comprises a second parameter describing the detected request tone. The gateway controller may start different actions for different tones if a parameter is transmitted that describes the tone.

A third event message is used to indicate that the gateway device has received and/or forwarded the first data. The third event message may be sent from the media gateway to the gateway controller to fulfill a protocol. The media gateway may change the voice channel back to voice mode before sending the third event message.

Signal data may be used to transmit the first data, wherein the signal data comprises a data block that includes the first data and/or a category value of the caller. The data block has a structure that may be defined in a packet which enhances the protocol. The category value may be used to fulfill other standards.

The structure of the first event message, the structure of the first parameter, the structure of the second parameter, the structure of the second event message and of the signal data may be defined in one package or in several packages. The method may be implemented by loading the new packages in the media gateway and in the media gateway controller.

The method may comprise:
- receiving a tone signal that indicates a request of the callee to get the number of the caller, and
- after receiving the tone signal requesting the transmission of the first data.

This results in a very simple method for transmitting the first data on a request basis. Alternatively, it is possible to transmit the first data without a request, i.e. for each call.

The method may comprise:
- after receiving the first data sending a message which confirms that the first data has been received and/or forwarded properly. This message may be necessary to fulfill the MEGACO/H.248 protocol.

Messages according to protocol IETF RFC 3015 or according to ITU-T protocol H.248.1 or a protocol that is based on one of these protocols may be used for performing the method:
- wherein the message is a first event message that is used to start the detection of a request tone which indicates that a callee requests the number of a caller,
- or wherein the message is a second event message which is used to signal the detection of a request tone by which the callee requests the number of the caller,
- or wherein the message is a third event message which is used to indicate that a gateway device has received first data comprising the digits of a caller number,
- or wherein the message comprises signal data comprising a data block that includes the first data and/or a category value of the caller.

It is advantageous to use all this messages in implementing the method. However, as stated above, it is also possible to use only one of the messages and omit the other messages or replace the other messages.

The technical effects that have been described for the methods are also valid for the corresponding messages.

A gateway device may comprise:
- a receiving unit that is able to receive digital coded first data which comprises the digits of a caller number,
   a generation unit that generates at least one tone for each digit, and
- a sending unit that is able to send the tones to a telephone of a callee,
- wherein the gateway device transmits data between networks using transmission protocols that are different from each other, and
wherein the gateway device is controlled by a control device and wherein the protocol according to IETF RFC 3015 or ITU-T protocol H. 248.1 is used between the gateway device and the control device or a protocol that is based on one of these protocol.

This gateway is adapted to perform the methods mentioned above and therefore achieves the same technical effects.

A gateway control device may comprise:
- a sending unit that is able to send digital coded first data which comprises the digits of a caller number to a gateway device which transmits data between networks using transmission protocols that are different from each other,
wherein the gateway control device operates according to IETF RFC 3015 protocol or ITU-T protocol H.248.1 or according to a protocol that is based on one of these protocols.

This gateway control device is adapted to perform the methods mentioned above and therefore achieves the same technical effects.

Moreover, according to the present invention there is provided a computer program having computer readable program code portions for performing the method according to one of the method claims.

The foregoing has outlined rather broadly the features and technical advantages of embodiments of the present invention in order that the detailed description of the invention that follows may be better understood. Additional features and advantages of embodiments of the invention will be described hereinafter, which form the subject of the claims of the invention.

### (Brief descriptions of the drawings)

For a more complete understanding of the present invention and the advantages thereof, reference is now made to the following description taken in conjunction with the accompanying drawings, in which:
- Figure 1: illustrates the connection of two subscriber terminals to an IP-network;
- Figure 2: illustrates a more general implementation of caller number identification;
- Figure 3: illustrates an ANI signaling flow in H.248;
- Figure 4: illustrates a media gateway controller;
- Figure 5: illustrates a media gateway;
- Figure 6: illustrates an ANI signaling flow;
- Figure 7: illustrates an andisp package flow;
- Figure 8: illustrates an andisp reply sent after completion of ANI transmission;
- Figure 9: illustrates an andisp reply sent immediately;
- Figure 10: illustrates a channel mode transition before/after ANI information transmission.

### (Detailed description of illustrative embodiments)

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. Moreover, same reference signs refer to same technical features if not stated otherwise. As far as "may" is used in this application it means the possibility of doing so as well as the actual technical implementation.

The present invention will be described with respect to preferred embodiments in a specific context namely number identification for a subscriber that is connected to an IP-network via an analog line. However, the invention may be used in other context as well.

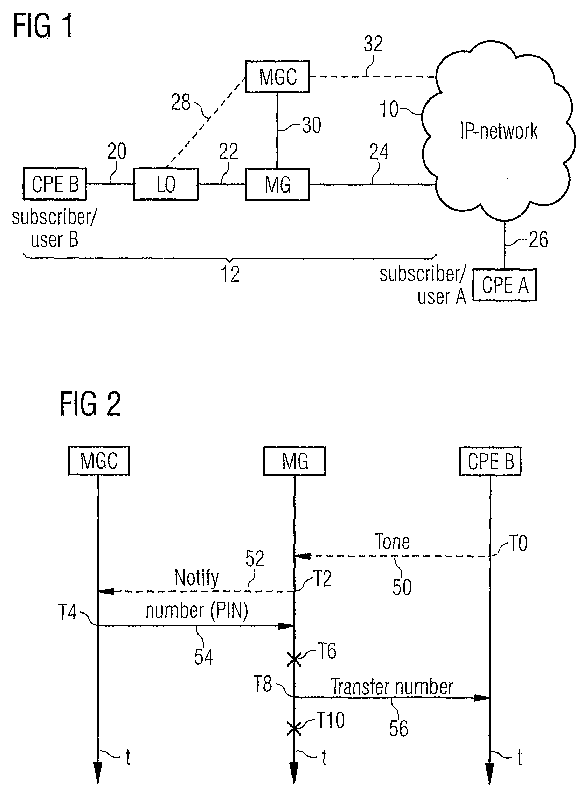

Figure 1 illustrates the connection of two subscriber terminals CPEA (customer premises equipment A) and CPEB (customer premises equipment B) to an IP-network 10 that works according to the Internet protocol. Subscriber A calls subscriber B and subscriber B wants to know the number of subscriber A.

The equipment of subscriber A is connected directly to the IP-network 10 via a line 26, for instance by using an internet service provider. Subscriber B is connected to a local office LO (local exchange) via a line 20 which is also named as analog line as analog voice data is transmitted via line 20.

Local office LO is connected to a media gateway MG via a voice line 22 and to a media gateway controller MGC via a signaling line 28. There is a control line 30 between media gateway MG and media gateway controller MGC. The control protocol used between media gateway MG and media gateway controller MGC is MEGACO or H.248 control protocol.

Equipment CPEB, local office LO, media gateway MG and media gateway controller MGC form an access network 12.

Media gateway controller MGC is connected to the network 10 via a signaling line 32. Media gateway MG is connected to network 10 via a voice line 24. Media gateway MG and media gateway controller MGC may alternatively implemented in only one device. Media gateway controller MGC typically controls more than one media gateway device. Media gateway MG may be a media gateway of the product line Surpass hiG, for instance Surpass hiG 1200, made by NSN (Nokia Siemens Networks Oy) or a media gateway of another manufacturer. Media gate way controller MGC may be a media gateway controller of the product line hiQ made by NSN (Nokia Siemens Networks Oy), for instance hiQ 8000, or a media gateway of another manufacturer.

Alternatively both subscribers A and B may be connected to a local exchange LO. This case is also named as IP trunking. The protocols used in the IP-network 10 to establish a VoIP connection are well known, for instance SIP (Session Initiation Protocol) and RTP (Real Time Control Protocol). Furthermore the signaling protocols in access network 12 to establish a connection are also well known.

Further, it is possible that subscriber B or subscriber A are connected to a private branch exchange that is connected to the internet.

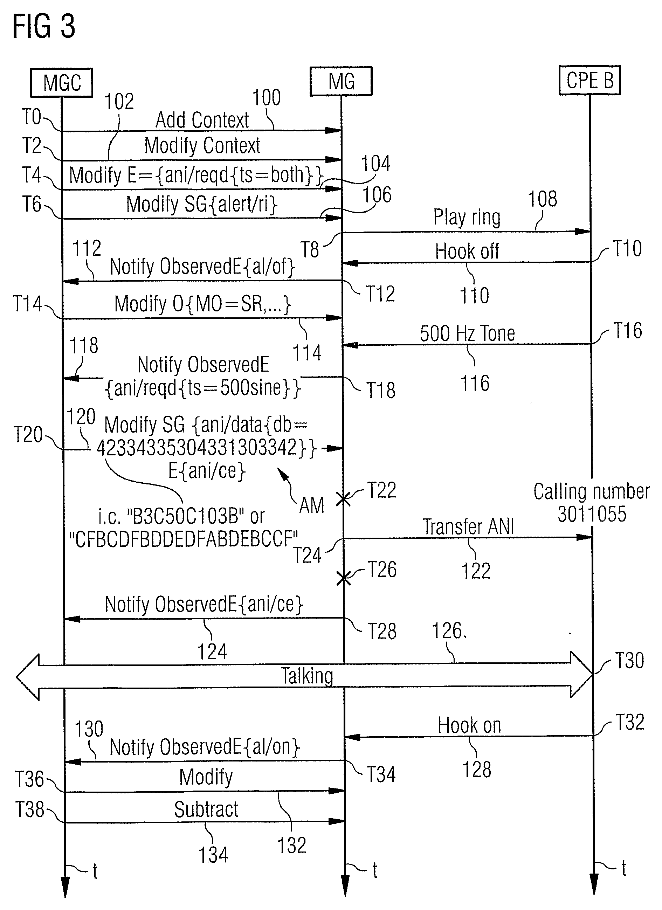

Figure 2 illustrates a more general implementation of caller number identification. Three time lines t are shown, where the same time points have the same horizontal location and earlier time points are located above later time points. It is assumed that media gateway MG detects request tones for all subscribers that are connected directly to media gateway MG by default. Alternatively, the detection may be requested as explained in more detail for Figure 3 below.

At time T0 callee B wants to know the telephone number of caller A who has established a connection or who tries to establish a connection with callee B. Therefore, subscriber B presses a corresponding button on his equipment CPEB. Equipment CPEB generates the analog request tone 50 and sends it via line 20 to the local office LO. Local office LO forwards tone 50 to media gateway MG via voice line 22.

Media gateway MG sends a notify message 52 at time T2 to the media gateway controller MGC via signaling line 30. Notify message 52 indicates, that callee B requests the telephone number of caller A. It is assumed that media gateway controller MGC knows the number already, for instance because the number is transmitted during the establishment of the connection, or it requests the number by a method that lies outside of this invention. At time T4 media gateway controller MGC sends the number of subscriber A to media gateway MG via line 30 using a data message 54.

At time T6, media gateway MG changes optionally the voice channel on line 20 from voice mode to signaling mode. Alternatively the voice channel may be left unchanged. Media gateway MG transfers the number data by means of tone signals 56 at time T8 to equipment CPEB.

Equipment CPEB converts the tone signals in displays data and displays the number of subscriber A at a display. Alternatively other presentation methods may be used.

After the transmission of the tone signals 56, media gateway MG optionally changes the voice channel back to a voice mode at time T10. Then, a voice connection is established between subscriber A (caller) and subscriber B (callee).

Figure 3 illustrates an ANI signaling flow in H.248. Three time lines t are shown, where the same time points have the same horizontal location and earlier time points are located above later time points.

Media gateway controller MGC sends an add message 100 to media gateway MG at time t0 via line 30. The term context is known from MEGACO/H.248 and relates here to the data that describes the configuration and state of equipment CPEB.

Media gateway controller MGC sends a modify message 102 to media gateway MG at time t2 via line 30. Modify message 102 modifies the newly created context according to the characteristic of equipment CPEB in a known manner.

Media gateway controller MGC sends a further modify message 104 to media gateway MG at time t4 via line 30. Modify message 104 refers to an event E that is defined in an "ani" package and has the event ID (IDendtification) "reqd" to indicate that the media gateway MG shall detect request tones from called party CPEB, which request tones request the caller telephone number. The event "reqd" is defined in more detail in section 5.1.2.1 below.

Modify message 104 comprises event description parameter ts that has the value "both" to indicate that media gateway MG shall detect request tones with 500 Hz sine wave or with 500 Hz square wave. The parameter ts is described in more detail in section 5.1.2.1 below. The media gateway MG is configured to detect both signal tones in response to modify message 104.

At time t6, media gateway controller MGC sends a modify message 106 to the media gateway MG. Modify message 106 relates to signals SG and indicates that caller A tries to establish a connection. Modify message 106 contains signal description parameters "alert/ri" to indicate that callee B should be alerted by sending a ring tone. "alert" refers to the alert package as defined in H.248.23.

At time t8, media gateway MG sends a ring tone signal 108 to equipment CPEB in response to modify message 106. Ring tone signal 108 is for instance created by applying a specific voltage to line 20.

After ringing of equipment CPEB caller B hooks off the receiver and creates a hook off signal 110 therewith, for instance a specific voltage on line 20. Hook off signal 110 is sent at time t10.

Media gateway MG detects hook off signal 110 and sends notify message 112 to media gateway controller MGC in response to hook off signal 110 at time t12. Notify message 112 contains an observed event parameter "al/of" that indicates that the receiver of equipment CPEB has been hooked off after alerting.

Media gateway controller MGC processes notify message 112 by forwarding a message to the network 10, for instance a corresponding SIP (Session Initiation Protocol) message which signals that callee B is ready to receive the call.

At time t14, modify message 114 is sent from media gateway controller MGC to media gateway MG to indicate that the transmission mode MO for the context is SR, i.e. send and receive.

At time t16, caller B pushes a button on his equipment to request callers A telephone number. Therefore, equipment CPEB sends a 500 Hz sine wave tone signal 116 at time t16 in response to the pressed button. Tone signal 116 is transmitted via line 20 and line 22 and received in media gateway MG.

Media gateway MG detects tone signal 116 and sends a notify message 118 to media gateway controller MGC at time t18 in response. Notify message 118 comprises observed event descriptor parameter "ani/reqd{ts=500sine}" to indicate that a 500 Hz sine tone has been detected. The observed event descriptor parameter ts is described in more detail in section 5.1.2.1 below.

In response to notify message 118 controller MGC signals to the network 10 side that the telephone number of caller A is requested. Alternatively, controller MGC may use data that is already stored in its memory.

At time t20, controller MGC sends a modify message 120 to gateway MG. Modify message 120 relates to signals SG and comprises "ani/data" that is defined according to section 5.1.3.1 below. Modify message 120 contains also event E "ani/ce" to indicate that the gateway MG has to send a message if the transmission of ANI information (caller number and category) has been completed, see section 5.1.2.2 below.

The data comprises in the example a data block db=42334335304331303342 according to section 5.1.3.1.1.1 below. This data is the ASCII code for "B3C50C103B" which corresponds to the caller number "3011055" and caller category three as explained in more detail in section 1.2 below.

At time t22 gateway MG changes the voice channel from voice mode to signaling mode. However this step is optionally or may be performed in a different way.

In response to modify message 120 gateway MG uses table 1 as described in section 1.1 below to generate the corresponding tones, for instance a tone of 1100 Hz and a tone of 1700 Hz for 0x42 or character "B". Both tones are sent at the same time via line 20. Thus tone signals 122 are generated at time t24. Alternatively, other coding schemes are used for generating the tones.

In an alternative embodiment controller MGC performs the look up in table 1. It shall be assumed that the following coding is performed:
A = 700 Hz; B = 900 Hz; C = 1100 Hz; D = 1300 Hz, E = 1500 Hz; F = 1700 Hz.

According to this coding data block db = CFBCDFBDDEDFABDEBCCF. Media gateway MG creates from the characters CF the tones of 1100 Hz and of 1700 Hz directly for the beginning character "B". The other characters are processed in the same way to transmit the number "3011055" and the caller category "3".

If tone signals 122 have been received in equipment CPEB the tones are decoded and are displayed in a display of equipment CPEB.

At time t26 gateway MG switches the voice channel back to voice mode. However this step is only performed if the step at time t22 has been performed and may be performed in a different way.

At time t28, gateway MG sends a notify message 124 to controller MGC as requested in modify message 120 to indicate that the transmission of the telephone number has been completed. Event "ani/ce" is used that is described in more detail in section 5.1.2.2 below.

At time t30 caller A and callee B are talking 126. At the end of the telephone call for instance callee B hooks the receiver on at time t32. Therefore, a hook on signal 128 is generated on line 20 and this signal is also transmitted to gateway MG via line 22. In response to hook on signal 128 gateway MG sends a notify message 130 that comprises the observed event parameter "al/on" to indicate that the receiver is hooked on again. Notify message 130 is sent at time t34 from gateway MG to controller MGC via line 30.

In response to notify message 130 and in response to further signaling from network 10 side controller MGC generates a modify message 132. Modify message 132 is sent from controller MGC to gateway MG at time t36 via line 30. Modify message 132 updates the context with regard to the end of the call.

At time t38, controller MGC sends a subtract message 134 to gateway MG to remove the relationship between the data structure representing caller A and the data structure representing callee B in the context.

This means that all messages shown in Figure 3 are in line with the original MEGACO/H.248 protocol or in line with an enhancement of this protocol as described in detail below.

Figures 2 and 3 illustrate flowcharts of a method and computer program product according to the present invention. It will be understood that each block or step of the flowchart and combinations of blocks in the flowchart, can be implemented by computer program instructions. These computer program instructions may be loaded onto a computer or another programmable apparatus to produce a machine, such that the instructions which are executed on the computer or other programmable apparatus create means for implementing the function specified in the blocks or steps of the flowchart. These computer program instructions may also be stored in a computer-readable memory, e.g. DVD, CD, diskette, that can direct a computer or other programmable apparatus to function in a particular manner. Moreover, these computer program instructions may be downloaded in e.g. a telecommunications network to cause operational steps to be performed on the computer or other programmable apparatus to produce a computer implemented process such that the instructions which execute on the computer or other programmable apparatus provide steps for implementing the functions specified in the blocks or steps of the flowchart.

Accordingly, blocks or steps of the flowchart support combinations of means for performing the specified functions, combinations of steps for performing the specified functions and program instruction means for performing the specified functions. It will also be understood that each block or step of the flowchart, and combinations of blocks or steps in the flowchart can be implemented by special purpose hardware-based computer systems which perform the specified function or steps or combinations of the special purpose hardware and computer instructions.

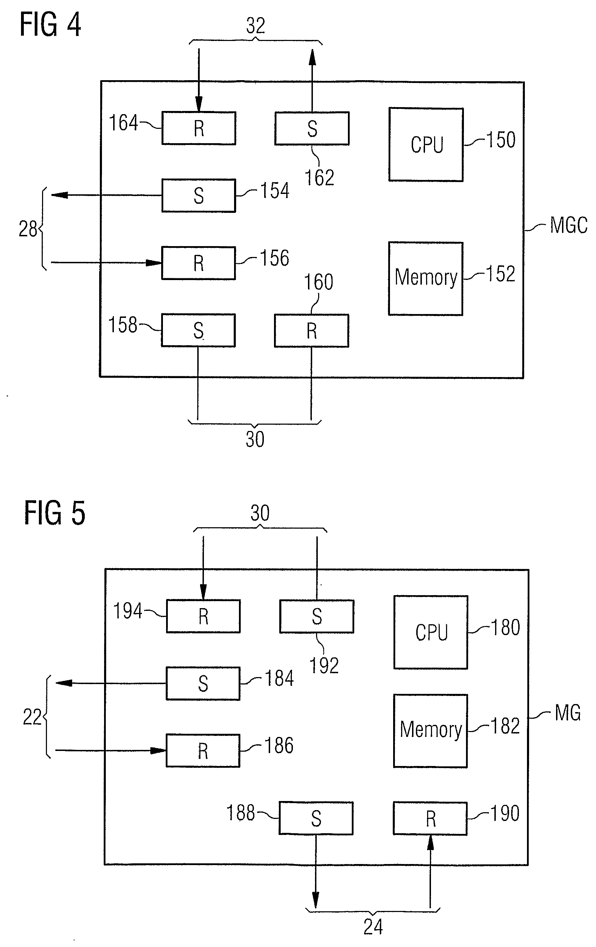

Figure 4 illustrates the main parts of media gateway controller MGC. Controller MGC comprises:
- a central processing unit 150 that is also named CPU,
- a memory unit 152 that stores operation code which is performed by CPU 150 and that stores data,
- a sending unit 154 for sending signals via line 28 to the local office LO,
- a sending unit 158 for sending control messages via line 30 to the gateway MG,
- a sending unit 162 for sending signaling messages to network 10,
- a receiving unit 156 for receiving signals from local office LO via line 28,
- a receiving unit 160 for receiving messages from gateway MG via line 30, and
- a receiving unit 164 for receiving signaling messages from network 10.

Controller MGC is realized using hardware and software. Alternatively controller MGC is realized only with hardware, i. e. without software.

Figure 5 illustrates the main parts of media gateway MG. Media gateway MG comprises;
- a central processing unit 180 that is also named CPU,
- a memory unit 182 that stores operation code which is performed by CPU 180 and that stores data,
- a sending unit 184 that sends tones (122) and analog voice to equipment CPEB and local office LO, i.e. via line 22, for instance using a line alone or using only a predetermined time slot of a time frame comprising more than one time slot,
- a sending unit 188 that sends voice to network 10 via line 24, i.e. it sends digitally coded voice data in data packets,
- a sending unit 192 that send messages to controller MGC via line 30, for instance messages 112, 118, 124 and 130,
- a receiving unit 186 that receives voice and tones, for instance 108, 110, 116 and 128, from local office LO via line 22,
- a receiving unit 190 for receiving voice data packets from network 10 via line 24, and
- a receiving unit 194 for receiving control messages, for instance 102, 104, 106, 114, 120, 132 and 132, from controller MGC via line 30.

Gateway MG is realized using hardware and software. Alternatively gateway MG is realized only with hardware, i.e. without software. In an alternative embodiment no mode switching is used in the voice channel.

In other words, an ANI Package in H.248 (MEGACO) Protocol is described.

### 1. Field of technology and background of embodiments of the invention

ANI (Automatic Number Identification) is one of the calling line identification presentations (CLIP). It's widely used in Public Switched Telephone Network (PSTN) of Russia and some European countries. It' s also a very special kind of CLIP, because its data frequency, data format, and signaling flow are different from other CLIP (Bellcore/NTT/ETSI (European Telecommunications Standards Institute) FSK(Frequency Shift Keying) and DTMF (Dual-Tone Multi-Frequency) et.).

### 1.1 Data frequency

ANI information should be represented in the form of the sequence of the signals consisting of two frequencies, sending without pause between them. But it's different from the standard Dual-Tone Multi-Frequency (DTMF) CLIP. Because they use different frequency set. The table 1 shows the difference between ANI and DTMF CLIP.

**Table1: Comparison between ANI and DTMF CLIP**

| Frequency information number | DTMF Primary/ Secondary Frequency (Hz) | ANI Primary/ Secondary Frequency (Hz) |
|---|---|---|
| 1 | 697/1209 | 700/900 |
| 2 | 697/1336 | 700/1100 |
| 3 | 697/1477 | 900/1100 |
| 4 | 770/1209 | 700/1300 |
| 5 | 770/1336 | 900/1300 |
| 6 | 770/1477 | 1100/1300 |
| 7 | 852/1209 | 700/1500 |
| 8 | 852/1336 | 900/1500 |
| 9 | 852/1477 | 1100/1500 |
| A | 697/1633 | 900/1700 |
| B | 770/1633 | 1100/1700 |
| C | 852/1633 | 1300/1700 |
| D | 941/1633 | 1500/1700 |
| * | 941/1209 | 0/0 |
| 0 | 941/1336 | 1300/1500 |
| # | 941/1477 | 700/1700 |

### 1.2 Data format

ANI information usually comprises begin/end mark, calling category, and the calling number. The calling number consists of 7 digits. If the calling number only consists of 5 or 6 digits which are less than 7 digits, additional digits will be given as the initial data, such as 22 or 00. If the number has digits more than 7, only the last 7 digits will be transmitted. ANI information should be transmitted in the following order:
1 - Begin/end mark
2 - Calling category digit
3 - 7th digit
4 - 6th digit
5 - 5th digit
6 - 4th digit
7 - 3rd digit
8 - 2nd digit
9 - 1st digit
10 - Begin/end mark

ANI information could be transmitted in cycle for 2 or 3 times. The calling number is transmitted in reverse order, the Begin/end mark uses the frequency of 1100/1700, which is represented by number 'B', and calling category is one of that:
1 - Standard subscriber. Long-distance calls permitted.
2 - Hotel subscriber. Long-distance calls permitted with immediate payment.
3 - Subscriber for local service only.
4 - Priority subscriber.
5 - Toll-free phone. Calls are not paid but being registered.
6 - Long-distance pay-phone.
7 - Subscriber with additional service. Long-distance calls permitted.
8 - Priority subscriber with additional service.
9 - Local pay-phone.
0 or 10 - Reserved.

If several equal digits are transmitted following each other every even-position digit of non-inverted (in normal record) calling number should be replaced by number 'C' (Digits repeated, frequency 1300/1700Hz).

For example, calling number is '3011055', and calling category is '3'. The ANI information will be 'B3C50C103B', and the first '3' means calling category.

1.3 Signalling flow

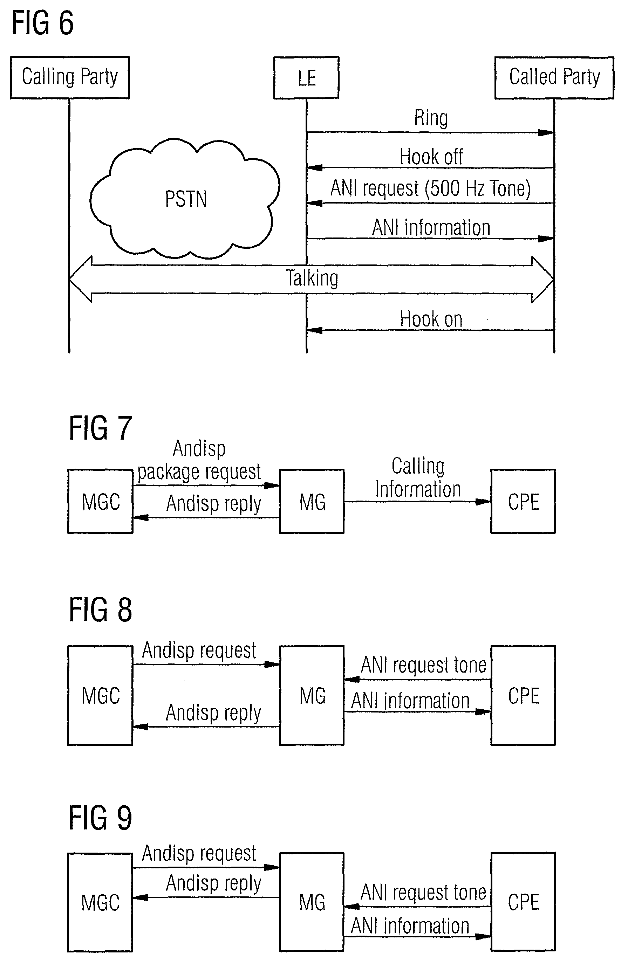

As seen from figure 6, ANI request tone is sent from called telephone after off-hook happened. When local exchange LE detects the ANI request tone, it will transmit the ANI information to telephone. So ANI request tone must be needed before ANI transmission.

ANI request tone has the following parameters: frequency - (500 +/-5) Hz; level within the range (minus 32 - minus 4) dBm0; duration - more than 90 ms. It can reach local exchange LE in the interval of time from 10 up to 275 ms after off-hook notification. In wave-form, it represents the 500Hz sine wave or 500Hz square wave. Because the two waves have different characters of frequency spectrum, the following parts will distinguish them as 500Hz sine tone and 500Hz square tone.

After called telephone hook off, the voice channel with voice mode will be created which is used for conversation between calling and called party. But ANI information may be transmitted in signaling mode. So the transition of the voice channel from voice mode to the signaling mode should take place after detection of ANI request tone, and reverse operation after completion of ANI information transmission.

### 2. Problem

ANI can be successfully implemented in PSTN. Could it work well in H.248 based VoIP network without any modification? No. Before it is transferred to VoIP network, there are many problems which need to be solved.

### 2.1 Inefficiency of andisp package in H.248 protocol

H.248 protocol has define the *andisp* package (Defined in ITU-T H.248.23), which is used to send calling information to CPE (Customer Premises Equipment), such as calling number, short message service, ADSI (Active Directory Service Interface), Message Waiting Indicator, or Advice of Charge.

As seen from figure 7, *andisp* package and calling information transmission are synchronous. That is to say, Firstly MGC sends the *andisp* package to media gateway MG. After receiving the package, MG will send the calling information to the CPE immediately. So the calling information transmission is controlled by MGC.

Whether *andisp* package could be used for ANI information transmission? First suppose that can work well. ANI is a special kind of CLIP. Only when MG receives the ANI request tone from CPE, it will send the ANI information. So the *andisp* package and ANI information transmission are asynchronous. Asynchronous operation has two cases: The first is that MG doesn't send the *andisp* reply until the completion of ANI information transmission. In this case MGC may wait for the reply for long time. The second is that MG only buffers the calling number after receiving the *andisp* package, and sends the *andisp* reply to MGC immediately. When MGC receives the *andisp* reply, it considers MG has completed the ANI information transmission, but in fact MG may wait for the request tone and does not send the ANI information. MGC maybe continue sending other messages to MG, and it will result in unexpected error, see Figures 8 and 9.

### 2.2 Unknown channel mode transition

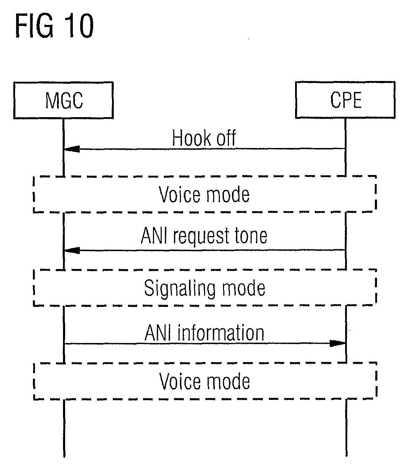

ANI information transmission happens after off-hook. In off-hook status, MG should create the voice channel with voice mode used for conversation between calling and called party. But ANI information transmission may work in the signaling mode. So voice channel will be changed from voice mode to signaling mode before ANI information transmission, and after completion of the transmission voice channel will change back to voice mode. At present, the channel transition is transparent to MGC. That is, MGC don't know this happens. So MGC may send H.248 messages related to channel, such as modify message, and it will result in H.248 message failure or no success of ANI information transmission, see Figure 10.

### 2.3 Calling category transmission unsupported

Besides the calling number, ANI information will consist of calling category information. But H.248 protocol can't supply the transmission of category. So it is inconvenient to ANI implementation.

### Embodiments of the Invention

The definition and usage of ANI package in H.248 protocol could easily implement the transition of ANI from PSTN to VoIP network.

### 5. Implementations and advantages

The problem mentioned above is that H.248 protocol does not has clear definition Event/Signal and control flow used for ANI. But defining new package in H.248 provides the flexible method for ANI implementation. New extension packages can be defined so that ANI could be transferred gapless from PSTN to the VoIP network.

### 5.1 Definition of ANI package

Package Name: Automatic Number Identification Package
PackageID: *ani,* (OxXXXX)
Description: This package defines events and signals for ANI.
Version: 1
Extends: None

### 5.1.1 Properties

### None

### 5.1.2 Events

### 5.1.2.1 ANI request detected

Event Name: ANI request detected
EventID: *reqd* (0x0001)
Description: This Event asks MG to detect ANI request tone from called party CPE, e.g. telephone. Typically the ANI request tone consists of 500Hz sine tone and 500Hz square tone.
EventsDescriptor Parameters: Tone style
Parameter Name: Tone style
ParameterID: *ts* (0x0001)
Description: Indicates the style of ANI request tone.
Type: Enumeration
Optional: No
Possible values: "500sine" (0x0001) 500Hz sine tone should be detected
   "500square" (0x0002) 500Hz square tone should be detected
   "Both" (0x0003) both should be detected
Default: "Both"
ObservedEventsDescriptor Parameters:

### Tone style

Parameter Name: Tone style
ParameterID: *ts* (0x0002)
Description: Indicates the style of ANI request tone
   detected, sine tone or square tone.
Type: Enumeration
Possible values: "500sine" (0x0001) 500Hz sine tone detected
   "500square" (0x0002) 500Hz square tone detected
Default: None
5.1.2.2 ANI completion Event
Event Name: ANI completion event
EventID: *ce* (0x0002)
Description: Indicates the detection of the completion of ANI information transmission.
EventsDescriptor Parameters: None
ObservedEventsDescriptor Parameters: None
5.1.3 Signals
5.1.3.1 Generic Data Signalling
Signal Name: Generic Data Signalling
SignalID: *data* (0x0003)
Description: Transmits the ANI information
Signal Type: Brief
Duration: Provisioned
5.1.3.1.1 Additional parameters
5.1.3.1.1.1 Data Block
Parameter Name: Data block
ParameterID: *db* (0x0003)
Description: The Data Block contains the ANI information to be sent to the CPE, and the ANI information consists of 10 digits. Each digit is encoded with ASCI code. The begin/end mark is digit 'B', the second digit is calling category, and the other 7 digits are calling number, which is in reverse order. If the calling number is less than 7 digits, additional digits will be given as the initial data, such as 2 or 0. On the opposite, if more than 7 digits, the last 7 digits will be used. The data format is as follow:
   1 - begin/end mark
   2 - ID, calling category
   3 - 7th digit
   4 - 6th digit
   5 - 5th digit
   6 - 4th digit
   7 - 3rd digit
   8 - 2nd digit
   9 - 1st digit
   10 -begin/end mark

If several equal digits following each other, the even-position digit of non-inverted (in normal record) calling number should be replaced by digit 'C'.

The category value is defined in section 1.2.

The default value of *db* is an empty data block which will be silently discarded by the gateway.
Type: Octet String
Optional: Yes
Possible values: See description above
Default: None

### 5.1.4 Statistics

### None

### 5.1.5 Procedures

If MGC indicates MG to send the ANI information, the following signals descriptor is used:
Signals{ani/data{db=...}}

When MG receives the signals, validation of ANI information should be checked. If valid, MG first transfers the voice channel from voice mode to signaling mode, and then sends the ANI information to CPE.

If ANI information transmission has been completed, MG first transfers the voice channel from signaling mode to voice mode, and then sends the following message to MGC.
Notify=port_1 {observedEvents=1234{ani/ce}}

Each digit in ANI information is decoded with ASCII code. For example, begin/end mark is digit 'B', which value is 0x42 (where Ox stands for Hexadecimal). The value of digit 'C' is 0x43, and Digit '1' is 0x31, etc.

### 5.2 Signalling flow in H.248

Figure 3 shows the H.248 signaling flow of called party, and the messages 104, 118, 120 and 124 are used for ANI.

### Modify=port_1{E=1234{ani/reqd{ts=both}}}

MGC requests that MG detects the ANI request tone, including 500Hz sine tone and 500Hz square tone. When MG receives the message, it will configure two detectors; one is used for 500Hz sine tone detection, other for 500Hz square tone.

### Notify=port_1{observedEvents=1234{ani/reqd{ts=500sine}}}

MG notifies MGC that 500Hz sine tone has been detected. If MG detects the 500Hz square tone, the ts will be equal to '500square'.

### Modify=port_1{SG{ani/data{db=...}}, E=1234{ani/ce}}

MGC sends the ANI information to MG, and also indicates MG to detect the completion of ANI transmission. When MG receive the message, it first changes the voice channel from voice mode to signaling mode, then send the ANI information to CPE, and begin to detect the completion of ANI transmission.

### Notify=port_1{ani/ce}

MG notifies MGC that ANI information transmission has been completed. When MG detects the completion of ANI transmission, it first changes the voice channel from signaling mode to voice mode, then sends the notify message to MGC.

### 6. List of abbreviations

ANI Automatic Number Identification
CLIP Calling Line Identification Presentations
DTMF Dual-Tone Multi-Frequency
PSTN Public Switched Telephone Network
VoIP Voice over IP
MEGACO Media Gateway Control Protocol
LE Local exchange
MGC Media Gateway Controller
MG Media Gateway
CPE Customer Premises Equipment

### 7. Proof of Usage

The H.248 messages between MGC and MG can be captured. If the message consists of ANI package, we know that ANI package is being used.

### Further remarks:

The method of transferring Automatic Number Identification (ANI) information as it has been described may borrow several technical details from the inter office R1 trunk register signaling system used between former analog trunc offices in the US; among others the same frequencies may be used. It may follow the ITU-T Recommendations Q.320 and Q.323.

An Eastern Europe variant of this signaling system is to omit the silent intervals between the digit signals, i.e. to send the digital signals one after the other without any break in between, in order to reduce the transmission time for the entire information packet. If two times the same digit is to be transferred (e.g. "55") a repetition mark "C" is inserted.

A method is proposed to transfer the ANI information from the media gateway to the customer-premises equipment CPE. Between the media gateway controller and the media gateway itself the ANI information package is transferred via an extended H.248 MEGACO protocol, the transmission towards the customer is based on the multi frequency in-band break-less transmission scheme described above.

There is the combination of the extended H.248 MEGACO protocol and the analog signal out pulsing scheme in order to come to a fast and reliable transmission of the calling line identification information.

### List of reference signs

T0 to T10 time
t0 to t38 time
CPEA customer premises equipment A
A caller
B callee
CPEB customer premises equipment B
LO local Office
MG media gateway
MGC media gateway controller
10 IP network
12 access network
20 line
22, 24 voice line
26 line
28 signaling line
30 control line
32 signaling line
50 tone signal
52 notify message
54 data message
56 tone signals
100 add message
102, 104, 106 modify message
108 ring tone signal
110 hook off signal
112 notify message
114 modify message
116 tone signal
118 notify message
120 modify message
122 tone signals
124 notify message
126 talking
128 hook on signal
130 notify message
132 modify message
134 subtract message
150 central processing unit
152 memory unit
154, 158, 162 sending unit
156, 160, 164 receiving unit
180 central processing unit
182 memory unit
184, 188, 192 sending unit
186, 190, 194 receiving unit

## Claims

1. Method for transmitting a caller number (ANI), comprising:
receiving (54, 120) digital coded first data (ANI) which comprises the digits of a caller (A) number,
using the received first data (ANI) to generate at least one tone for each digit,
sending (56, 122) the generated tones to a telephone (CPEB) of a callee (B),
wherein all steps are performed automatically in a gateway device (MG) which transmits data between networks (10, 12) using transmission protocols that are different from each other,
wherein the gateway device (MG) is controlled by a control device (MGC) and wherein the protocol according to IETF RFC 3015 or ITU-T protocol H.248.1 is used between the gateway device (MG) and the control device (MGC) or a protocol that is based on one of these protocols,
**characterized in that**
each digit is represented in the form of a signal consisting of two frequencies out of the six frequencies 700 Hz, 900 Hz, 1100 Hz, 1300 Hz, 1500 Hz and 1700 Hz
and that there is no silence interval between the tones or silent intervals between successive tones are smaller than 20 ms and that a repetition character is used in the first data (ANI) to indicate repetition of a character.

2. Method according to claim 1, comprising:
storing data which specifies at least one tone for each digit value,
using the stored data to determine the corresponding at least one tone for each digit of the caller (A) number in the received data (ANI).

3. Method according to one of claims 1 or 2, wherein a voice channel is switched (t22, T6) from a voice mode to a signaling mode after receiving digital coded first data (ANI) and before sending (56, 122) the generated tones.

4. Method according to one of claims 1 to 3, wherein a first event message (104) is used to start the detection of a request tone (116) which indicates that the callee (B) requests the number of the caller (A).

5. Method according to claim 4, wherein the first event message (104) comprises a parameter (ts) describing the request tone (116).

6. Method according to claim 4 or 5, wherein the first event message (104) is modify command according to the following definition:
Event Name: ANI request detected
EventID: *reqd* (0x0001)
Description: This Event asks MG to detect ANI request tone from called party CPE, e.g. telephone. Typically the ANI request tone consists of 500Hz sine tone and 500Hz square tone,
EventsDescriptor Parameters: Tone style
Parameter Name: Tone style
ParameterID: *ts* (0x0001)
Description: Indicates the style of ANI request tone.
Type: Enumeration
Optional: No
Possible values: "500sine" (0x0001) 500Hz sine tone should
be detected
"500square" (0x0002) 500Hz square tone should be detected
"Both" (0x0003) both should be detected
Default: "Both".

7. Method according to one of claim 1 to 6, wherein a second event message (118) is used to signal the detection of a request tone (116) which indicates that the callee (B) requests the number of the caller (A).

8. Method according to claim 7, wherein the second event message (118) comprises a second parameter (ts) describing the detected request tone (116).

9. Method according to claim 8, wherein the second event message (118) is a notify command according to the following definition:
ObservedEventsDescriptor Parameters:
Tone style
Parameter Name: Tone style
ParameterID: *ts* (0x0002)
Description: Indicates the style of ANI request tone
detected, sine tone or square tone.
Type: Enumeration
Possible values: "500sine" (0x0001) 500Hz sine tone detected
"500square" (0x0002) 500Hz square tone detected
Default: None.

10. Method according to one of claims 1 to 9, wherein a third event message (124) is used to indicate that the gateway device (MG) has received and/or forwarded the first data (ANI).

11. Method according to one of claims 1 to 9, wherein a third event message (124) notify command according to the following definition:
Event Name: ANI completion event
EventID: *ce* (0x0002)
Description: Indicates the detection of the completion of ANI information transmission,
EventsDescriptor Parameters: None,
ObservedEventsDescriptor Parameters: None.

12. Method according to one of claims 1 to 11, wherein signal data (120) is used to transmit the first data (ANI),
wherein the signal data (120) comprises a data block that includes the first data (ANI) and/or a category value of the caller (A).

13. Method according to claim 12, wherein the signal data (120) is transmitted in a modify message according to the following definition:
Signal Name: Generic Data Signalling
SignalID: *data* (0x0003)
Description: Transmits the ANI information Signal Type: Brief
Duration: Provisioned;
Additional parameters
Data Block
Parameter Name: Data block
ParameterID: *db* (0x0003)
Description: The Data Block contains the ANI information to be sent to the CPE, and the ANI information consists of 10 digits. Each digit is encoded with ASCII code. The begin/end mark is digit 'B', the second digit is calling category, and the other 7 digits are calling number, which is in reverse order. If the calling number is less than 7 digits, additional digits will be given as the initial data, such as 2 or 0. On the opposite, if more than 7 digits, the last 7 digits will be used. The data format is as follow:
1 - begin/end mark
2 - ID, calling category
3 - 7th digit
4 - 6th digit
5 - 5th digit
6 - 4th digit
7 - 3rd digit
8 - 2nd digit
9 - 1st digit
10 -begin/end mark;
Type: Octet String
Optional: Yes
Possible values: See description above
Default: None.

14. Gateway device (MG) comprising:
a receiving unit (194) that is able to receive digital coded first data (ANI) which comprises the digits of a caller (A) number,
a generation unit (180, 182) that generates at least one tone for each digit, and
a sending unit (184) that is able to send the tones to a telephone (CPEB) of a callee (B),
wherein the gateway device (MG) transmits data between networks (10, 12) using transmission protocols that are different from each other,
wherein the gateway device (MG) is controlled by a control device (MGC) and wherein the protocol according to IETF RFC 3015 or ITU-T protocol H.248.1 is used between the gateway device (MG) and the control device (MGC) or a protocol that is based on one of these protocols,
**characterized in that**
each digit is represented in the form of a signal consisting of two frequencies out of the six frequencies 700 Hz, 900 Hz, 1100 Hz, 1300 Hz, 1500 Hz and 1700 Hz
and that there is no silence interval between the tones or silent intervals between successive tones are smaller than 20 ms
and that a repetition character is used in the first data (ANI) to indicate repetition of a character.

15. Gateway device (MG) according to claim 14 comprising units to perform a method according to one of the claims 1 to 13.

## Patentansprüche

1. Verfahren zum Übertragen einer Anrufernummer (ANI), das Folgendes umfasst:
Empfangen (54, 120) digitaler codierter erster Daten (ANI), die die Ziffern einer Anrufernummer (A-Nummer) umfassen,
Verwenden der empfangenen ersten Daten (ANI), um mindestens einen Ton für jede Ziffer zu erzeugen,
Senden (56, 122) der erzeugten Töne an ein Telefon (CPEB) eines Angerufenen (B),
wobei alle Schritte automatisch in einer Gateway-Vorrichtung (MG) ausgeführt werden, die Daten zwischen Netzen (10, 12) unter Verwendung von Übertragungsprotokollen, die voneinander verschieden sind, überträgt, wobei die Gateway-Vorrichtung (MG) durch eine Steuervorrichtung (MGC) gesteuert wird und wobei das Protokoll gemäß IETF RFC 3015 oder ITU-T-Protokoll H.248.1 zwischen der Gateway-Vorrichtung (MG) und der Steuervorrichtung (MGC) oder ein Protokoll, das auf einem dieser Protokolle beruht, verwendet wird,
**dadurch gekennzeichnet, dass**
jede Ziffer in der Form eines Signals repräsentiert ist, das aus zwei der sechs Frequenzen 700 Hz, 900 Hz, 1100 Hz, 1300 Hz, 1500 Hz und 1700 HZ besteht,
und dass es kein Stilleintervall zwischen den Tönen gibt oder Stilleintervalle zwischen aufeinanderfolgenden Tönen kürzer als 20 ms sind
und dass ein Wiederholungszeichen in den ersten Daten (ANI) verwendet wird, um eine Wiederholung eines Zeichens anzugeben.

2. Verfahren nach Anspruch 1, das Folgendes umfasst:
Speichern von Daten, die mindestens einen Ton für jeden Ziffernwert bestimmen,
Verwenden der gespeicherten Daten, um den entsprechenden mindestens einen Ton für jede Ziffer der Anrufernummer (A-Nummer) in den empfangenen Daten (ANI) zu bestimmen.

3. Verfahren nach einem der Ansprüche 1 oder 2, wobei ein Sprachkanal von einer Sprachbetriebsart zu einer Signalisierungsbetriebsart geschaltet wird (t22, T6), nachdem digitale codierte erste Daten (ANI) empfangen wurden und bevor die erzeugten Töne gesendet werden (56, 122).

4. Verfahren nach einem der Ansprüche 1 bis 3, wobei eine erste Ereignisnachricht (104) verwendet wird, um die Detektion eines Anforderungstons (116), der angibt, dass der Angerufene (B) die Nummer des Anrufers (A) anfordert, zu starten.

5. Verfahren nach Anspruch 4, wobei die erste Ereignisnachricht (104) einen Parameter (ts) umfasst, der den Anforderungston (116) beschreibt.

6. Verfahren nach Anspruch 4 oder 5, wobei die erste Ereignisnachricht (104) ein Änderungsbefehl gemäß der folgenden Definition ist:
Ereignisname: ANI-Anforderung detektiert
Ereignis-ID: *reqd* (0x0001)
Beschreibung: Dieses Ereignis bittet MG, einen ANI-Anforderungston von dem angerufenen Beteiligten, CPE, z. B. Telefon, zu detektieren. Typischerweise besteht der ANI-Anforderungston aus einem 500 Hz-Sinuston und einem quadratischen 500 Hz-Ton,
Ereignisdeskriptorparameter: Tonstil
Parametername: Tonstil
Parameter-ID: *ts* (0x0001)
Beschreibung: Gibt den Stil eines ANI-Anforderungstons
an.
Typ: Aufzählung
Optional: Nein
Mögliche Werte: "500Sinus" (0x0001) 500 Hz-Sinuston sollte detektiert werden
"500quadratisch" (0x0002) quadratischer
500 Hz-Ton sollte detektiert werden
"Beide" (0x0003) beide sollten detektiert werden
Standardeinstellung: "Beide"

7. Verfahren nach einem der Ansprüche 1 bis 6, wobei eine zweite Ereignisnachricht (118) verwendet wird, um die Detektion eines Anforderungstons (116) zu signalisieren, der angibt, das der Angerufene (B) die Nummer des Anrufers (A) anfordert.

8. Verfahren nach Anspruch 7, wobei die zweite Ereignisnachricht (118) einen zweiten Parameter (ts) umfasst, der den detektierten Anforderungston (116) beschreibt.

9. Verfahren nach Anspruch 8, wobei die zweite Ereignisnachricht (118) ein Benachrichtigungsbefehl gemäß der folgenden Definition ist:
Parameter des Deskriptors festgestellter Ereignisse: Tonstil
Parametername: Tonstil
Parameter-ID: *ts* (0x0002)
Beschreibung: Gibt den Stil eines detektierten ANI-Anforderungstons, Sinuston oder quadratischer Ton, an.
Typ: Aufzählung
Mögliche Werte: "500Sinus" (0x0001) 500 Hz=Sinuston wurde detektiert
"500quadratisch" (0x0002) quadratischer
500 Hz-Ton wurde detektiert
Standardeinstellung: Keine.

10. Verfahren nach einem der Ansprüche 1 bis 9, wobei eine dritte Ereignisnachricht (124) verwendet wird, um anzugeben, dass die Gateway-Vorrichtung (MG) die ersten Daten (ANI) empfangen und/oder weitergeleitet hat.

11. Verfahren nach einem der Ansprüche 1 bis 9, wobei eine dritte Ereignisnachricht (124) ein Benachrichtigungsbefehl gemäß der folgenden Definition ist:
Ereignisname: ANI-Ausführungsereignis
Ereignis-ID: ce (0x0002)
Beschreibung: Gibt die Detektion der Ausführung einer ANI-Informationsübertragung an,
Ereignisdeskriptorparameter: Keine
Parameter des Deskriptors festgestellter Ereignisse: Keine.

12. Verfahren nach einem der Ansprüche 1 bis 11, wobei Signaldaten (120) verwendet werden, um die ersten Daten (ANI) zu senden,
wobei die Signaldaten (120) einen Datenblock umfassen, der die ersten Daten (ANI) und/oder einen Kategoriewert des Anrufers (A) enthält.

13. Verfahren nach Anspruch 12, wobei die Signaldaten (120) in einer Änderungsnachricht gemäß der folgenden Definition gesendet werden:
Signalname: Generische Datensignalisierung
Signal-ID: *Daten* (0x0003)
Beschreibung: Sendet die ANI-Informationen
Signaltyp: Kurz
Dauer: Bereitgestellt;
Zusätzliche Parameter
Datenblock
Parametername: Datenblock
Parameter-ID: db (0x0003)
Beschreibung: Der Datenblock enthält die an den CPE zu sendenden ANI-Informationen, und die ANI-Informationen bestehen aus 10 Ziffern. Jede Ziffer ist mit ASCII-Code codiert. Die Start- bzw. Endmarkierung ist Ziffer 'B', die zweite Ziffer ist die Anrufkategorie, und die anderen 7 Ziffern sind die Anrufnummer, die eine umgekehrte Reihenfolge hat. Wenn die Anrufnummer kürzer als 7 Ziffern ist, werden zusätzliche Ziffern als die Anfangsdaten gegeben, wie etwa 2 oder 0. Wenn es andererseits mehr als 7 Ziffern gibt, werden die 7 letzten Ziffern verwendet. Das Datenformat ist wie folgt:
1 - Start- bzw. Endmarkierung
2 - ID, Anrufkategorie
3 - 7. Ziffer
4 - 6. Ziffer
5 - 5. Ziffer
6 - 4. Ziffer
7 - 3. Ziffer
8 - 2. Ziffer
9 - 1. Ziffer
10 - Start- bzw. Endmarkierung;
Typ: 8-Bit-Zeichenkette
Optional: Ja
Mögliche Werte: Siehe Beschreibung oben
Standardeinstellung: Keine.

14. Gateway-Vorrichtung (MG), die Folgendes umfasst:
eine Empfangseinheit (194), die digitale codierte erste Daten (ANI) empfangen kann, die die Ziffern einer Anrufernummer (A-Nummer) umfassen, eine Erzeugungseinheit (180, 182), die mindestens einen Ton für jede Ziffer erzeugt, und
eine Sendeeinheit (184), die die Töne an ein Telefon (CPEB) eines Angerufenen (B) senden kann,
wobei die Gateway-Vorrichtung (MG) Daten zwischen Netzen (10, 12) unter Verwendung von Übertragungsprotokollen, die voneinander verschieden sind, überträgt,
wobei die Gateway-Vorrichtung (MG) durch eine Steuervorrichtung (MGC) gesteuert wird und wobei das Protokoll gemäß IETF RFC 3015 oder ITU-T-Protokoll H.248.1 zwischen der Gateway-Vorrichtung (MG) und der Steuervorrichtung (MGC) oder ein Protokoll, das auf einem dieser Protokolle beruht, verwendet wird,
**dadurch gekennzeichnet, dass**
jede Ziffer in der Form eines Signal repräsentiert ist, das aus zwei der sechs Frequenzen 700 Hz, 900 Hz, 1100 Hz, 1300 Hz, 1500 Hz und 1700 Hz besteht,
und dass es kein Stilleintervall zwischen den Tönen gibt oder Stilleintervalle zwischen aufeinanderfolgenden Tönen kürzer als 20 ms sind
und dass ein Wiederholungszeichen in den ersten Daten (ANI) verwendet wird, um eine Wiederholung eines Zeichens anzugeben.

15. Gateway-Vorrichtung (MG) nach Anspruch 14, die Einheiten umfasst, um ein Verfahren nach einem der Ansprüche 1 bis 13 auszuführen.

## Revendications

1. Procédé de transmission d'un numéro d'appelant (ANI), comprenant les étapes consistant à :
recevoir (54, 120) des premières données numériques codées (ANI) qui comprennent les chiffres du numéro d'un appelant (A),
utiliser les premières données reçues (ANI) pour générer au moins une tonalité pour chaque chiffre,
envoyer (56, 122) les tonalités engendrées à un téléphone (CPEB) d'appelé (B),
dans lequel toutes les étapes sont effectuées automatiquement dans un dispositif de passerelle (MG) qui transmet des données entre des réseaux (10, 12) utilisant des protocoles de transmission qui sont différents les uns des autres,
dans lequel le dispositif de passerelle (MG) est commandé par un dispositif de commande (MGC) et dans lequel entre le dispositif de passerelle (MG) et le dispositif de commande (MGC), est utilisé le protocole selon IETF RFC 3015 ou le protocole UIT-T H.248.1 ou encore un protocole qui est fondé sur l'un de ces protocoles,
**caractérisé en ce que** :
chaque chiffre est représenté sous la forme d'un signal composé de deux fréquences parmi les six fréquences 700 Hz, 900 Hz, 1100 Hz, 1300 Hz, 1500 Hz et 1700 Hz,
**en ce qu'**il n'existe aucun intervalle de silence entre les tonalités ou les intervalles silencieux entre des tonalités successives sont inférieurs à 20 ms, et
**en ce qu'**un caractère de répétition est utilisé dans les premières données (ANI) pour indiquer la répétition d'un caractère.

2. Procédé selon la revendication 1, comprenant les étapes consistant à :
stocker des données qui spécifient au moins une tonalité pour chaque valeur de chiffre,
utiliser les données stockées pour déterminer ladite au moins une tonalité correspondante pour chaque chiffre du numéro de l'appelant (A) dans les données reçues (ANI).

3. Procédé selon l'une des revendications 1 ou 2, dans lequel un canal à fréquences vocales passe (t22, T6) d'un mode vocal à un mode de signalisation après réception des premières données numériques codées (ANI) et avant l'envoi (56, 122) des tonalités générées.

4. Procédé selon l'une des revendications 1 à 3, dans lequel un premier message d'événement (104) est utilisé pour démarrer la détection d'une tonalité de demande (116) qui indique que l'appelé (B) demande le numéro de l'appelant (A).

5. Procédé selon la revendication 4, dans lequel le premier message d'événement (104) comprend un paramètre (ts) décrivant la tonalité de demande (116).

6. Procédé selon la revendication 4 ou 5, dans lequel le premier message d'événement (104) est une commande Modify selon la définition suivante :
Nom de l'événement : ANI request detected
Identificateur de l'événement : *reqd* (0x0001)
Description : cet événement demande à la passerelle MG de détecter une tonalité de demande ANI provenant de l'équipement CPE de la partie appelée, par exemple un téléphone. Généralement, la tonalité de demande ANI se compose d'une tonalité en onde sinusoïdale de 500 Hz et d'une tonalité en onde carrée de 500 Hz
Paramètres EventsDescriptor : Style de tonalité
Nom du Paramètre: Tone style
Identificateur du paramètre : *ts* (0x0001)
Description : indique le style de tonalité de demande ANI
Type : Énumération
Facultatif : Non
Valeurs possible « 500sine » (0x0001), une tonalité de 500 Hz en onde sinusoïdale doit être détectée
« 500square » (0x0002), une tonalité de 500 Hz en onde carrée doit être détectée
« Both » (0x0003), les deux doivent être détectées
Par défaut : « Both ».

7. Procédé selon l'une des revendications 1 à 6, dans lequel un deuxième message d'événement (118) est utilisé pour signaler la détection d'une tonalité de demande (116) qui indique que l'appelé (B) demande le numéro de l'appelant (A).

8. Procédé selon la revendication 7, dans lequel le deuxième message d'événement (118) comprend un deuxième paramètre (ts) décrivant la tonalité de demande détectée (116).

9. Procédé selon la revendication 8, dans lequel le deuxième message d'événement (118) est une commande Notify selon la définition suivante :
Paramètres ObservedEventsDescriptor : Style de tonalité
Nom du Paramètre: Tone style
Identificateur du paramètre : *ts* (0x0002)
Description : indique le style de tonalité de demande ANI détectée, tonalité en onde sinusoïdale ou tonalité en onde carrée
Type : Énumération
Valeurs possible « 500sine » (0x0001),
tonalité de 500 Hz en onde sinusoïdale détectée
« 500square » (0x0002), tonalité de 500 Hz en onde carrée détectée
Par défaut : Aucune

10. Procédé selon l'une des revendications 1 à 9, dans lequel un troisième message d'événement (124) est utilisé pour indiquer que le dispositif de passerelle (MG) a reçu et/ou transféré les premières données (ANI).

11. Procédé selon l'une des revendications 1 à 9, dans lequel un troisième message d'événement (124) est une commande *Notify* selon la définition suivante :
Nom de l'événement : ANI completion event
Identificateur de l'événement : *ce* (0x0002)
Description : indique la détection de l'achèvement de la transmission d'informations ANI
Paramètres EventsDescriptor : Aucun
Paramètres ObservedEventsDescriptor : Aucun.

12. Procédé selon l'une des revendications 1 à 11, dans lequel des données de signal (120) sont utilisées pour transmettre les premières données (ANI),
dans lequel les données de signal (120) comprennent un bloc de données qui inclut les premières données (ANI) et/ou une valeur de catégorie de l'appelant (A).

13. Procédé selon la revendication 12, dans lequel les données de signal (120) sont transmises dans un message Modify selon la définition suivante :
Nom du signal : Generic Data Signalling
Identificateur du signal: *data* (0x0003)
Description : transmet les informations ANI
Type de signal : bref
Durée : configurée ;
Paramètres additionnels
Bloc de données
Nom du Paramètre : Data block
Identificateur du paramètre : *db* (0x0003)
Description : le bloc de données contient les informations ANI à envoyer à l'équipement CPE, et les informations ANI se composent de 10 chiffres. Chaque chiffre est codé à l'aide du code ASCII. La marque de début/fin est le chiffre « B », le deuxième chiffre est la catégorie d'appel et les 7 autres chiffres sont le numéro d'appel qui est dans l'ordre inverse. Si le numéro d'appel compte moins de 7 chiffres, des chiffres supplémentaires seront donnés en tant que données initiales, notamment 2 ou 0. En revanche, s'il compte plus de 7 chiffres, les 7 derniers chiffres seront utilisés. Le format des données est le suivant :
1 - marque de début/fin
2 - identificateur, catégorie d'appel
3 - 7^{e} chiffre
4 - 6^{e} chiffre
5 - 5^{e} chiffre
6 - 4^{e} chiffre
7 - 3^{e} chiffre
8 - 2^{e} chiffre
9 - 1^{er} chiffre
10 - marque de début/fin ;
Type : chaîne d'octets
Facultatif : oui
Valeurs possible voir description ci-dessus
Par défaut : Aucune.

14. Dispositif de passerelle (MG) comprenant :
une unité de réception (194) qui est apte à recevoir des premières données numériques codées (ANI) qui comprennent les chiffres du numéro d'un appelant (A),
une unité de génération (180, 182) qui génère au moins une tonalité pour chaque chiffre, et
une unité d'envoi (184) qui est apte à envoyer les tonalités à un téléphone (CPEB) d'appelé (B),
dans lequel le dispositif de passerelle (MG) transmet des données entre des réseaux (10, 12) utilisant des protocoles de transmission qui sont différents les uns des autres,
dans lequel le dispositif de passerelle (MG) est commandé par un dispositif de commande (MGC) et dans lequel entre le dispositif de passerelle (MG) et le dispositif de commande (MGC), est utilisé le protocole selon IETF RFC 3015 ou le protocole UIT-T H.248.1 ou encore un protocole qui est fondé sur l'un de ces protocoles,
**caractérisé en ce que** :
chaque chiffre est représenté sous la forme d'un signal composé de deux fréquences parmi les six fréquences 700 Hz, 900 Hz, 1100 Hz, 1300 Hz, 1500 Hz et 1700 Hz,
**en ce qu'**il n'existe aucun intervalle de silence entre les tonalités ou les intervalles silencieux entre des tonalités successives sont inférieurs à 20 ms, et
**en ce qu'**un caractère de répétition est utilisé dans les premières données (ANI) pour indiquer la répétition d'un caractère.

15. Dispositif de passerelle (MG) selon la revendication 14, comprenant des unités pour mettre en oeuvre un procédé selon l'une des revendications 1 à 13.
